(19)

Europäisches Patentamt

European Patent Office

Office européen des brevets

(11) **EP 4 568 090 A1**

(12) **EUROPEAN PATENT APPLICATION**

(43) Date of publication:
**11.06.2025 Bulletin 2025/24**

(21) Application number: **24204921.1**

(22) Date of filing: **07.10.2024**

(51) International Patent Classification (IPC):
**H02M 1/32** (2007.01)    **H02M 7/5387** (2007.01)
**H02M 1/00** (2006.01)    **H02M 1/08** (2006.01)

(52) Cooperative Patent Classification (CPC):
**H02M 1/322; H02M 1/0006; H02M 1/08;
H02M 7/5387**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.12.2023 US 202363608022 P**

(71) Applicant: **Eaton Intelligent Power Limited
Dublin 4 (IE)**

(72) Inventors:
- **Baranwal, Rohit
  Dublin, D04 Y0C2 (IE)**
- **Singh, Yash Veer
  Dublin, D04 Y0C2 (IE)**
- **Schroedermeier, Andy
  Dublin, D04 Y0C2 (IE)**

(74) Representative: **Schwan Schorer & Partner mbB
Patentanwälte
Bauerstraße 22
80796 München (DE)**

(54) **SELF POWERED ACTIVE DISCHARGED CIRCUIT**

(57)    A discharge system comprises a discharge circuit including a discharge resistor in series with a discharge transistor. The discharge transistor has a control terminal. A discharge controller for providing a control command to the control terminal responsive to the control command to turn on or turn off the discharge transistor. The discharge controller includes a control circuit for providing a control, the control signal is configured to control at least one of a discharge enable circuit and a discharge disable circuit. The discharge enable circuit responds to the control signal from the control circuit to enable the discharge circuit and includes a pull-up resistor in series with a first diode between a positive bus and a negative bus, and an enable circuit junction between the pull-up resistor and the first diode is in series with a fourth resistor and connected to the control terminal of the discharge transistor. The discharge disable circuit responds to the control signal from the control circuit to disable the discharge circuit.

**FIG. 1**

EP 4 568 090 A1

# Description

## Cross-Reference to Related Application

This application claims the benefit of U.S. Provisional Patent Application No. 63/608,022, filed Dec. 8, 2023. The disclosure of the priority application in its entirety is hereby incorporated by reference into the presence application.

## Government License Rights

This invention was made with government support under Contract No. HQ0034-20-2-0007 awarded by the Department of Defense. The government has certain rights in the invention.

## Background

The inverter has a large DC link capacitor, which is charged to high voltages during operation. The capacitor can remain at these dangerous voltages for long times after the inverter is shut off. It is preferred that the discharge of the capacitor is completed in a short time. Therefore, techniques have been proposed for rapid discharge. However, a large value always in-circuit resistor results in slow discharge times while a small value always in-circuit resistance will result in excessive power wastage.

## Summary

According to a first exemplary aspect of the present disclosure, there is provided a discharge system for an inverter comprising a discharge circuit including a discharge resistor in series with a discharge transistor. The discharge transistor has a control terminal. A discharge controller for providing a control command to the control terminal responsive to the control command to turn on or turn off the discharge transistor. The discharge controller includes a control circuit for providing a control signal, the control signal is configured to control at least one of a discharge enable circuit and a discharge disable circuit. The discharge enable circuit responds to the control signal from the control circuit to enable the discharge circuit and includes a pull-up resistor in series with a first diode between a positive bus and a negative bus, and an enable circuit junction between the pull-up resistor and the first diode is in series with a fourth resistor and connected to the control terminal of the discharge transistor. The discharge disable circuit responds to the control signal from the control circuit to disable the discharge circuit.

According to a second exemplary aspect of the present disclosure, there is provided a method for enabling a discharge circuit comprising steps of biasing a control terminal of a discharge transistor to voltage of a first Zener diode, the first Zener diode being in series with a discharge enable resistor and connected between the control terminal of the discharge transistor and a negative bus; turning on the discharge transistor; discharging through a discharge resistor and a feedback resistor; and generating feedback signal through an opto-isolator.

According to a third exemplary aspect of the present disclosure, there is provided a method for disabling a discharge circuit comprising steps of biasing a control terminal of a discharge transistor to voltage of a first Zener diode , the first Zener diode being in series with a discharge enable resistor and connected between the control terminal of the discharge transistor and a negative bus; turning on the discharge transistor; discharging through a discharge resistor and a feedback resistor; biasing a discharge disable resistor and a discharge disable capacitor to voltage of a second Zener diode, the second Zener diode being in series with the discharge disable resistor and connected between the discharge resistor and the negative bus; turning on a second latch MOSFET of discharge disable circuit; and turning off the discharge transistor .

A variety of examples of desirable product features or methods are set forth in part in the description that follows, and in part will be apparent from the description, or may be learned by practicing various aspects of the disclosure. The aspects of the disclosure may relate to individual features as well as combinations of features. It is to be understood that both the foregoing general description and the following detailed description are explanatory only and are not restrictive of the claimed invention.

## Brief Description of the Drawings

FIG. 1 is a schematic diagram showing an embodiment of an electric device having an active discharge system.

FIG. 2 is a schematic diagram showing another embodiment of an electric device having another active discharge system.

FIG. 3 is a schematic diagram showing another embodiment of an electric device having another active discharge system.

FIG. 4 is a flowchart schematically illustrating an example of Normal Operation mode OR Signal Power Loss mode carried out by each active discharge system of an electric device;

FIG. 5 is a flowchart schematically illustrating an example of Normal Operation mode OR Signal Power Loss mode carried out by each active discharge system of the electric device illustrated in FIG. 1;

FIG. 6 is a flowchart schematically illustrating another example of Normal Operation mode OR Signal Power Loss mode carried out by each active discharge system of the electric device illustrated in FIG. 2;

FIG. 7 is a flowchart schematically illustrating another example of Normal Operation mode OR Signal Power Loss mode carried out by each active discharge system of the electric device illustrated in FIG. 3;

FIG. 8 is a flowchart schematically illustrating an example of Timed Safety Shutdown mode carried out by each active discharge system of an electric device;

FIG. 9 is a flowchart schematically illustrating an example of Timed Safety Shutdown mode carried out by each active discharge system of the electric device illustrated in FIG. 1;

FIG. 10 is a flowchart schematically illustrating another example of Timed Safety Shutdown mode carried out by each active discharge system of the electric device illustrated in FIG. 2;

FIG. 11 is a flowchart schematically illustrating another example of Timed Safety Shutdown mode carried out by each active discharge system of the electric device illustrated in FIG. 3.

FIG. 12 is waveform plots showing a Normal Operation mode of the active discharge circuit of the invention at an 800V DC bus.

FIG. 13 is waveform plots showing a Safety Shutdown mode of the active discharge circuit of the invention at an 800V DC bus.

FIG. 14 is waveform plots showing a Failsafe Discharge with Control Power Loss of the active discharge circuit of the invention at an 800V DC bus.

FIG. 15 is waveform plots showing a Safety Shutdown with Signal Power Loss of the active discharge circuit of the invention at an 800V DC bus.

## Detailed Description

Reference will now be made in detail to exemplary aspects of the present disclosure that are illustrated in the accompanying drawings. Wherever possible, the same reference numbers will be used throughout the drawings to refer to the same or like parts.
The discharge circuit is a device for discharging a capacitor connected in parallel to an input end or output end of a power converter connected between a battery and a motor. The discharge system taught in the present specification is a type in which the discharge resistor is connected to the capacitor in particular cases (e.g., collision), and rapidly discharges the capacitor.

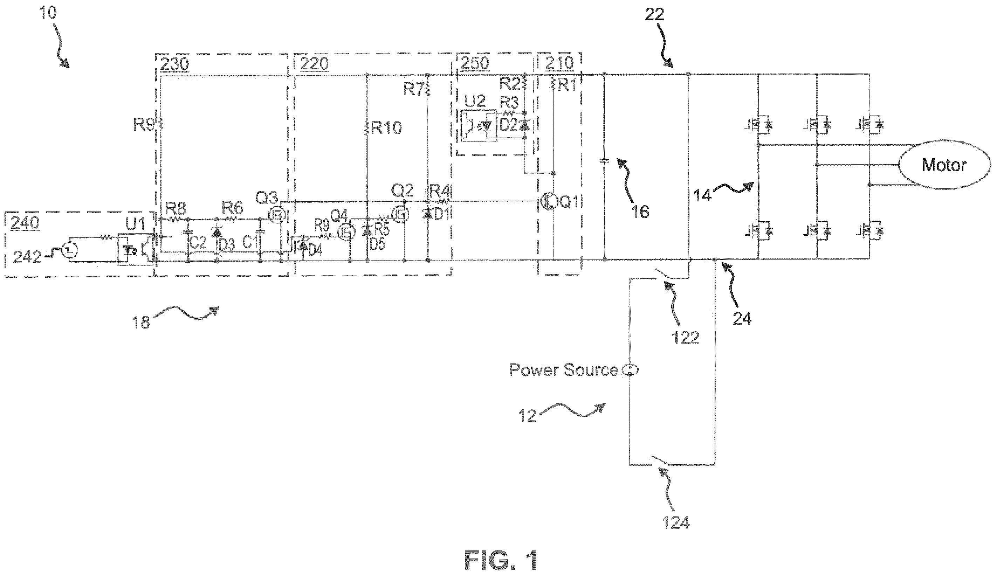

Referring to FIGS. 1-3, an electric device 10 includes a DC power source 12 coupled to contactor switches 122 and 124. The DC power source 12 may be a battery pack or a fuel cell. Contactors 122 and 124 are, for example, mechanical switches having an open state and a closed state for selectively coupling the DC power source 12 to a positive bus 22 and a negative bus 24 of electric device 10. A main capacitor (i.e., DC link) 16 functions as a linking capacitor for an inverter 14. Inverter 14 includes a plurality of switching devices in a bridge configuration. The switches in inverter 14 are switched in a desired manner to drive a motor.
FIGS. 1-3 show several embodiments of an active discharge system 18 for an inverter 14 connected across link capacitor 16 and between positive DC bus 22 and negative DC bus 24. In some embodiments, the active discharge system 18 includes a discharge circuit 210, 310, 410 and a discharge controller, and the discharge controller includes at least one of a discharge enable circuit 220, 320, 420, a discharge disable circuit 230, 330, 430, a discharge control circuit 240, 340, 440 and a discharge feedback circuit 250, 350, 450.
Discharge resistor power is defined as DC bus voltage squared by resistance ( $V_{dc}^2/R_{discharge}$ ). Thus, a smaller value of discharge resistance will lead to higher power loss when it is in-circuit during normal operation. A smaller discharge resistor is desired when discharging, because it will give a faster discharge, but it is not desired to be always in-circuit across the DC bus voltage due to power wastage, as well as being large in physical size. On the other hand, a larger value always in-circuit discharge resistor will dissipate low power and will be smaller in physical size, but will give a slow discharge. So, the invention has a small value discharge resistor that is not in-circuit during normal operation and is only brought in-circuit during discharge operation to provide a quick discharge time. This small value discharge resistor does not need to dissipate the full rated power( $V_{dc}^2/R_{discharge}$ ) during normal operation of inverter since it is not in-circuit then and it only needs to dissipate a surge of energy during the discharge mode. Thus, physically size of the discharge resistor can be reduced.
Still referring to FIG. 1-3, one aspect of techniques taught in the present specification provides an active discharge system 18 for an inverter 14 comprising a discharge circuit 210, 310, 410 including a discharge resistor R1 in series with a discharge transistor Q1, and the discharge transistor R1 has a control terminal for enabling or disabling the discharge circuit 210, 310, 410. A discharge controller provides a control command to the control terminal, which is responsive to the control command to turn on or turn off the discharge transistor Q1. The discharge controller includes a control circuit 230, 330, 430 for providing a control signal to at least one of the discharge enable circuit 220, 320, 420 and a discharge disable circuit 230, 330, 430. The discharge enable circuit 220, 320, 420 includes a pull-up resistor R7 in series with a first Zener diode D1 between a positive bus 22 and a negative bus 24, and an enable circuit junction between the pull-up resistor R7 and the first Zener diode DI is in series with a fourth resistor R4 and connected to the control terminal of the discharge transistor Q1. Examples of the self powered active discharge system 18 for an inverter 14 are powered by the voltage, for example, 400-800V, from the link capacitor 16, so no extra power sources are necessary to drive the discharge system. Additionally, the discharge enable circuit and discharge disable circuit are configured to operate independently and automatically upon loss of control command or signal from the discharge control circuit, which strengthen the reliability and safety of the electric device. Note that the constant voltage output unit may be configured by a varistor, a series regulator, a three-terminal regulator, or the like, instead of the first Zener diode D1. Details of examples of each circuit are presented as follows.

Discharge circuit

As illustrated in FIGS. 1-3, in some embodiments, the discharge circuit 210, 310, 410 comprises a discharge resistor R1 in series with a discharge switch Q1. The discharge switch Q1 has a control terminal for selectably turning the discharge switch Q1 on and off via a disable enable circuit 220, 320, 420 in response to a control command from a discharge controller.

Discharge enable circuit

As illustrated in FIGS. 1-3, the discharge enable circuit 220, 320, 420 at least includes a fourth and seventh resistor R4 and R7 for current limiting, and a constant voltage output unit such as the first Zener diode D1. In some embodiments, the discharge enable circuit 220, 320, 420 is powered by the voltage from capacitor 16.

In some embodiments, the constant voltage output unit includes a high-potential side terminal connected to one terminal of the current limiting seventh resistor R7, and a low-potential side terminal connected to a negative bus 24. In some embodiments, the constant voltage output unit outputs predetermined constant voltage between the high-potential side terminal and the low-potential side terminal. In some embodiments, the constant voltage output unit is composed of a first Zener diode D1 connected in such a way that, for example, the high-potential side terminal serves as a cathode, and the low-potential side terminal serves as an anode. In some embodiments, the first Zener diode D1 is also referred to as a constant-voltage diode (reference diode). In some embodiments, the first Zener diode D1 indicates a property substantially similar to that of a normal diode when voltage is applied in a forward bias direction, but indicates a property that current rapidly flows due to avalanche breakdown when voltage applied in a reverse bias direction exceeds breakdown voltage (Zener voltage). In some embodiments, the first Zener diode D1 as the constant voltage output unit has the cathode connected to the negative side terminal of the current limiting seventh resistor R7 and the control terminal of the discharge transistor Q1 via a fourth resistor R4 which being the switch for discharge in the discharge circuit 210, 310, 410, and the anode connected to the negative bus 24. Thus, a direction toward the negative bus 24 from the negative side terminal of the seventh resistor R7 and the control terminal of the discharge transistor Q1 via thefourth resistor R4 is the reverse bias direction of the first Zener diode D1. When voltage applied to the first Zener diode D1 as the constant voltage output unit exceeds breakdown voltage of the first Zener diode D1, current rapidly flows due to avalanche breakdown, and constant voltage equivalent to breakdown voltage appears in the cathode of the first Zener diode D1 being the high-potential side terminal of the constant voltage output unit. Since the control terminal of the discharge transistor Q1 being the switch for discharge in the discharge circuit 210, 310, 410 is connected to the cathode of the first Zener diode D1 being the high-potential side terminal of the constant voltage output unit, constant voltage equivalent to breakdown voltage is applied to the control terminal of a semiconductor switching element in the discharge transistor Q1. In the present embodiments, the first Zener diode D1 and the current limiting fourth and seventh resistor R4 and R7 are selected in such a way that the constant voltage output unit can output such voltage that the semiconductor switching element in the discharge transistor Q1 is turned on. Note that the discharge transistor may be configured by a NPN IGBT or other XSTR, MOSFET with different polarity control signals.

**Discharge disable circuit**

As illustrated in FIGS. 1-3, the discharge disable circuit 230, 330, 430 is powered by the voltage from the link capacitor 16. In some embodiments, the function of the discharge control circuit 240, 340, 440 of the discharge controller is to provide a control signal that has a low voltage level to the control terminal of discharge switch Q1 via the discharge disable circuit 230, 330, 430 so that discharge switch Q1 is turned off (and capacitor 16 is not discharged). In some embodiments, the discharge disable circuit 230, 330, 430 responsive to a disable signal from the control circuit 230, 330, 430 to disable the discharge circuit 210, 310, 410. In some embodiments, when the disable signal from discharge control circuit 240, 340, 440 is stopped, the discharge disable circuit 230, 330, 430 starts a predetermined time interval (i.e., a short fixed time that is only sufficient to discharge the link capacitor 16 under normal conditions). When the time interval expires, the discharge disable circuit 230, 330, 430 continuously closes the discharge switch Q1. In some embodiments, the discharge disable circuit 230, 330, 430 may remain in this off state as long as the voltage on link capacitor 16 remains above a threshold (e.g., the turn-on threshold of a latch transistor (latch transistor) Q3 in discharge disable circuit 230, 330, 430 as described below) or until the disable controller restarts the disable signal. Such discharge disable circuit 230, 330, 430 is called a discharge disable circuit 230, 330, 430 with delay and secure the safety shut off the discharge circuit 210, 310, 410 with tunable turn-off time.

In some embodiments, the discharge disable circuit 230, 330, 430 with delay is powered by the voltage from capacitor 16. In some embodiments, the discharge disable circuit 230, 330, 430 has a third MOSFET Q3 that functions as a latch switch connected between the gate terminal of the discharge switch Q1 and the negative bus 24. In some embodiments, the gate terminal of the third MOSFET Q3 is connected to a connection point between a sixth resistor R6 and a first capacitor C1, and the resistor R6 and the first capacitor C1 are connected in series with an eighth resistor R8 between a disable circuit junction and the negative bus 24, and are connected in parallel to a third Zener diode D3 and to a discharge disable capacitor C2 between the eighth resistor R8 and the negative bus 24. In some embodiments, the sixth resistor R6 and the first capacitor C1 form an resistive-capacitive timing network. In some embodiments, the third Zener diode D3 is connected to protect the third MOSFET Q3. The voltage across the first capacitor C1 gradually increases until the conduction threshold of the third MOSFET Q3 is reached (assuming that the power from the link capacitor 16 remains long enough), according to the resistive-capacitive time constant of the resistive-capacitive network.

**Discharge control circuit**

As illustrated in FIGS. 1-3, the function of the discharge control circuit 240, 340, 440 of the discharge controller is to provide a control signal has a low voltage level from control signal source 242 to the control terminal of discharge switch Q1 so that discharge switch Q1 is turned off (and capacitor 16 is not discharged through R1). In some embodiments, the low voltage level can be obtained by shunting the control terminal to the negative DC bus 23, for example. When the control signal ceases (i.e., drops to a low logic level), the output of disable circuit 28 is automatically pulled up to a voltage sufficient to turn on discharge switch 27 and capacitor 16 is quickly discharged unless a condition exists in which a voltage continues to be applied across busses 22 and 23. By setting the output of the signal source 242 to a low voltage level, the active discharge system 18 can discharge the link capacitor 16 after a power loss and a signal loss, as the voltage of the electric device 10 gradually drops to a low voltage level after a certain period of time of power failure. Thus, even in the signal loss mode, the timely discharge of the link capacitor 16 is ensured.

**Discharge feedback circuit**

As illustrated in FIGS. 1-3, the function of the discharge feedback circuit 250, 350, 450 of the discharge controller is to provide a feedback signal to indicate whether or not the discharge circuit 210, 310, 410 is enabled. In some embodiments, the discharge feedback circuit 250, 350, 450 is connected in parallel to a discharge resistor R1 of the discharge circuit 210, 310, 410 between the positive bus 22 and a discharge transistor Q1 of the discharge circuit 210, 310, 410.

In some embodiments, the discharge feedback circuit 250, 350, 450 includes a second resistor R2 being connected in series with a second Zener diode D2, and an opto-isolator U2 being connected in series with a third resistor R3 and in parallel to the second Zener diode D2. While discharge circuit 210, 310, 410 is enabled, current flows through the discharge resistor R1 and a feedback resistor R2 of the discharge feedback circuit 250, 350, 450. In some embodiments, a feedback signal is generated by the opto-isolator U2.

Note that the constant voltage output unit may be configured by a varistor, a series regulator, a three-terminal regulator, or the like, instead of any of the Zener diode D1 - D5. As the transistors/switches Q1 ~ Q4, SiC-based power devices such as SiC DIMISFET and SiC TMISFET, or GaN-based power devices such as GaN-based High Electron Mobility Transistor (HEMT) can be applied. In some cases, power devices such as Si-based MOSFETs and IGBTs are also applicable. In some embodiments, Q1 is IGBT while Q2, Q3 and Q4 are MOSFETs.

**Operating modes**

Some embodiments of the electric device 10 with an active discharge system 18 may operate under different modes, such as Normal Operation mode, Signal Power Loss mode and Timed Safety Shutdown mode. In Normal Operation mode, the active discharge system 18 discharges the link capacitor 12 after power source 12 is disconnected. In Signal Power Loss mode, the active discharge system 18 discharges the link capacitor 12 after the power source 12 and signal source 242 are disconnected. In Timed Safety Shutdown mode, the active discharge system 18 shutdowns with a delay after the link capacitor 12 is discharged, while the power source 12 is disconnected.

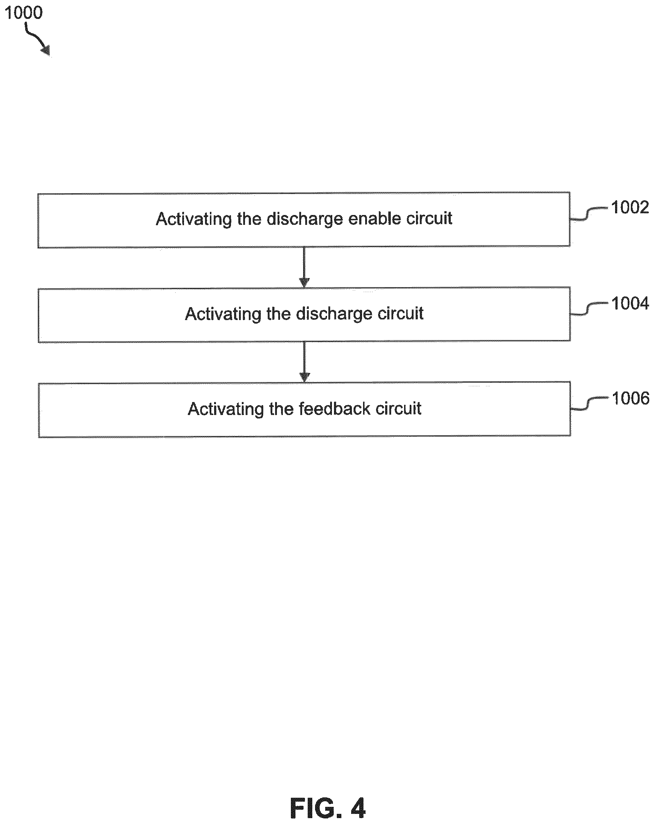

FIG. 4 shows a flowchart schematically illustrating an example method of a Normal Operation mode or a Signal Power Loss mode of the active discharge systems 18 illustrated in FIGS. 1-3. In some embodiments, the method 1000 for enabling a discharge circuit comprising steps of activating the discharge enable circuit (Step 1002), activating the discharge circuit (Step 1004), and/or activating the feedback circuit (Step 1006).

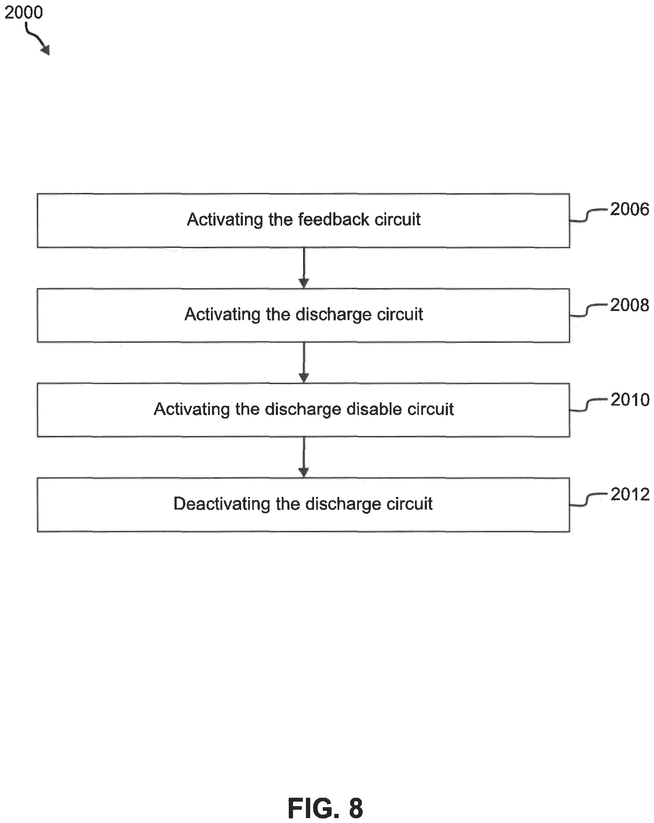

FIG. 8 shows a flowchart schematically illustrating an example method of a Timed Safety Shutdown mode of the active discharge systems 18 illustrated in FIGS. 1-3. In some embodiments, the method 2000 for disabling a discharge circuit comprising steps of activating the feedback circuit (Step 2006), activating the discharge circuit (Step 2008), activating the discharge disable circuit (Step 2010), and/or deactivating the discharge circuit (Step 2012).

Some embodiments of the electric device 10 with an active discharge system 18 and their operating modes are further described below.

**Option A**

FIG. 1 shows an embodiment of an active discharge system 18 for an inverter 14 connected across link capacitor 16 and between positive DC bus 22 and negative DC bus 24. In some embodiments, the active discharge system 18 includes a discharge circuit 210 and a discharge controller, and the discharge controller includes at least one of a discharge enable circuit 220, a discharge disable circuit 230, a discharge control circuit 240 and a discharge feedback circuit 250.

As illustrated in FIG. 1, the discharge enable circuit 220 at least includes a fourth and seventh resistor R4 and R7 for current limiting, and a constant voltage output unit such as the first Zener diode D1. In some embodiments, the discharge enable circuit 220 further includes a Q2-Q4 circuit including a second latch MOSFET Q2, a fourth latch MOSFET Q4, and the surrounding components, e.g., a fifth resistor R5, a fifth Zener diode D5, a ninth resistor R9 and/or a fourth Zener diode D4. In some embodiments, the second latch MOSFET Q2 connects between the fourth resistor R4 and the negative bus 24, and the gate terminal of the second latch MOSFET Q2 is connected to a fifth resistor R5. In some embodiments, a fifth Zener diode D5 is located between the fifth resistor R5 and the negative bus 24. In some embodiments, a tenth resistor R10 is connected to a second junction between the fifth resistor R5 and the fifth Zener diode D5. In some embodiments, the fourth latch MOSFET Q4 is connected between the second junction and the negative bus, the gate terminal of the fourth latch MOSFET is connected to a ninth resistor R9. In some embodiments, a fourth Zener diode D4 located between the ninth resistor R9 and the negative bus, both the fourth Zener diode D4 and the ninth resistor R9 connect to the output of the discharge control circuit 240.

Still referring to FIG. 1, the discharge control circuit 240 includes a first photo coupler U1. In some embodiments, the first photo coupler U1 connects to the signal source 242 and controls a disable time of the discharge circuit 310, and a turn-off command is input to the discharge disable circuit 330 via the first photo coupler U1.

a. Normal Operation mode OR Signal Power Loss mode

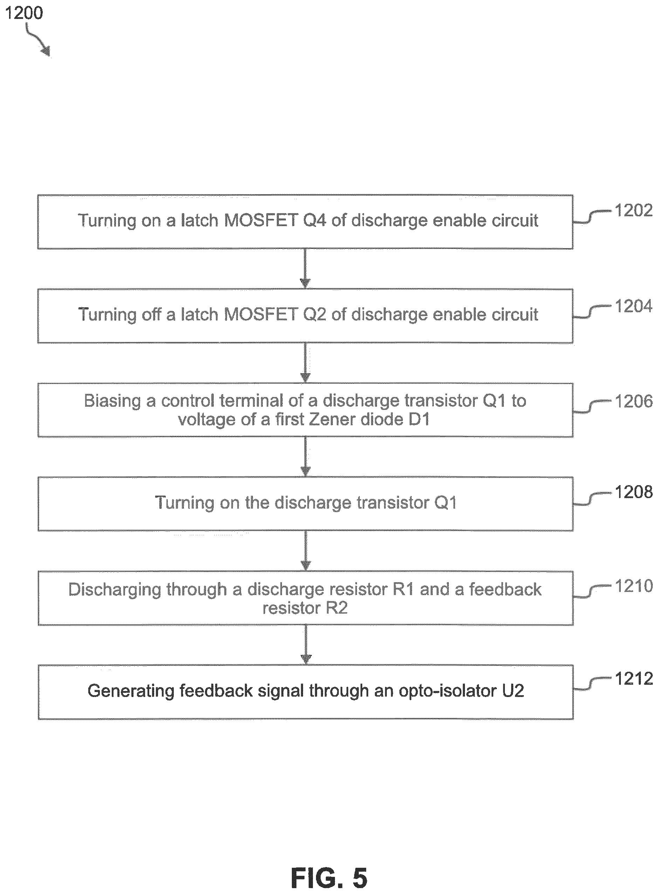

As illustrated in FIG. 5, a method for enabling a discharge circuit, comprising steps of turning on a fourth latch MOSFET Q4 of discharge enable circuit 220 (Step 1202); turning off a second latch MOSFET Q2 of discharge enable circuit 220 (Step 1204); biasing a control terminal of a discharge transistor Q1 to voltage of a first Zener diode D1, the first Zener diode being in series with a discharge enable resistor R4 and connected between the control terminal of the discharge transistor and a negative bus (Step 1206); turning on the discharge transistor Q1 (Step 1208); discharging through a discharge resistor R1 and a feedback resistor R2 (Step 1210); and/or generating feedback signal through an opto-isolator U2 (Step 1212).

b. Timed Safety Shutdown mode

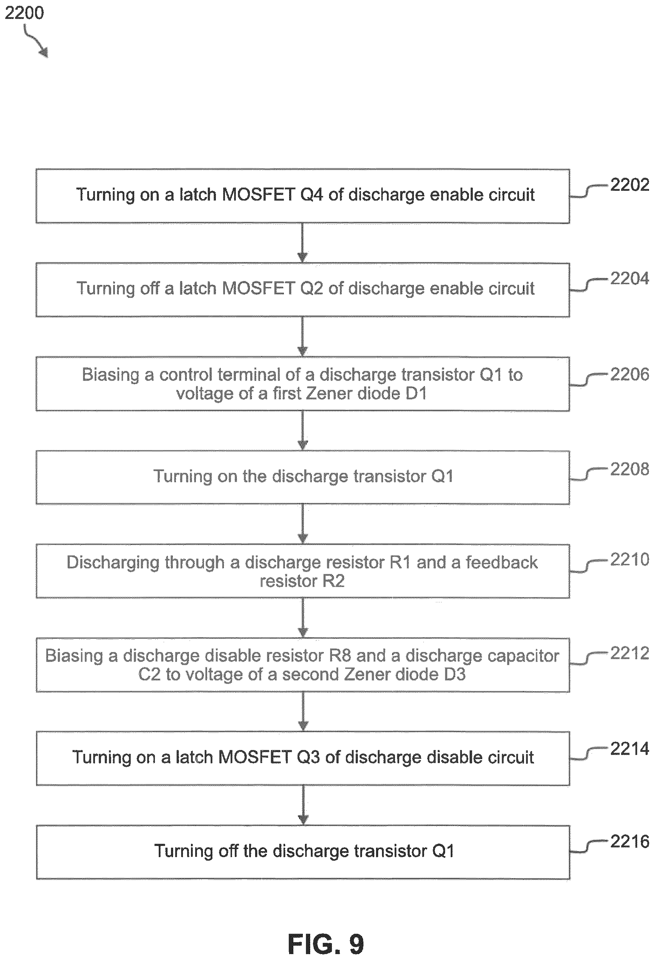

As illustrated in FIG. 9, a method for disabling a discharge circuit, comprising steps of turning on a fourth latch MOSFET Q4 of discharge enable circuit 220 (Step 2202); and turning off a second latch MOSFET Q2 of discharge enable circuit 220 (Step 2204); biasing a control terminal of a discharge transistor Q1 to voltage of a first Zener diode D1, the first Zener diode D1 being in series with a discharge enable resistor R4 and connected between the control terminal of the discharge transistor and a negative bus (Step 2206); turning on the discharge transistor Q1 (Step 2208); discharging through a discharge resistor R1 and a feedback resistor R2 (Step 2210); biasing a discharge disable resistor R8 and a discharge disable capacitor C2 to voltage of a second Zener diode D3, the second Zener diode D3 being in series with the discharge disable resistor R8 and connected between the discharge resistor R1 and the negative bus (Step 2212); turning on a third latch MOSFET Q3 of discharge disable circuit (Step 2214); and/or turning off the discharge transistor Q1 (Step 2216).

**Option B**

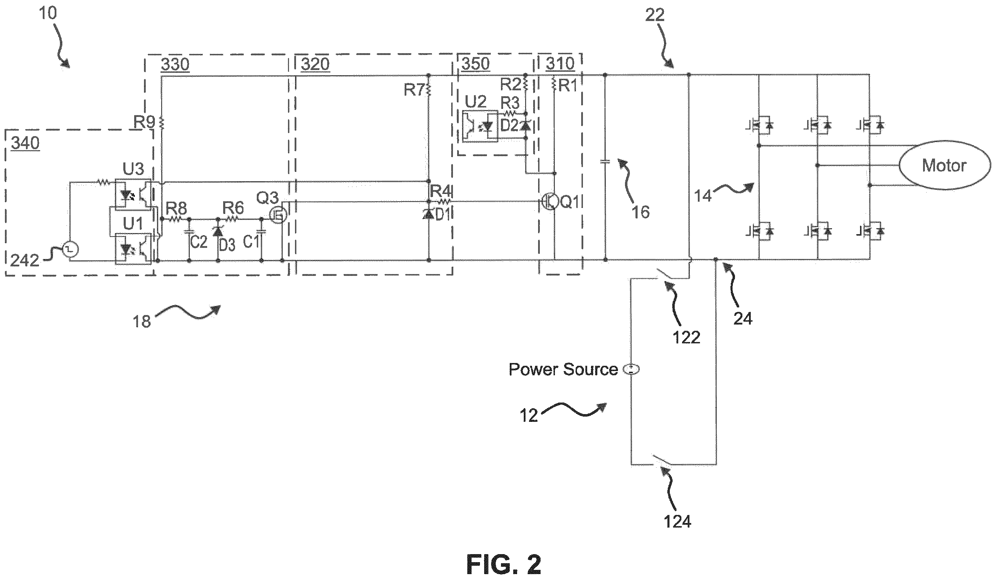

FIG. 2 shows another embodiment of an active discharge system 18 for an inverter 14 connected across link capacitor 16 and between positive DC bus 22 and negative DC bus 24. In some embodiments, the active discharge system 18 includes a discharge circuit 310 and a discharge controller, and the discharge controller includes at least one of a discharge enable circuit 320, a discharge disable circuit 330, a discharge control circuit 340 and a discharge feedback circuit 350.

As illustrated in FIG. 2, the discharge enable circuit 320 at least includes a fourth and seventh resistor R4 and R7 for current limiting, and a constant voltage output unit such as the first Zener diode D1.

Still referring to FIG. 2, the discharge control circuit 340 includes a third photocoupler U3 in parallel to a first photo coupler U1, while the discharge control circuit 240 of Option A includes a first photo coupler U1. In some embodiments, the third photocoupler U3 connects between the signal source 242 via a control resistor and the enable circuit junction. The third photocoupler U3 in option B may replace Q2-Q4 circuit in option A, thus simplifies the components and provides different options for different electric device design requirements. In some embodiments, the first photo coupler U1 connects to the signal source 242 and controls a disable time of the discharge circuit 310, a turn-off command is input to the discharge disable circuit 330 via the first photo coupler U1.

a. Normal Operation OR Signal Power Loss

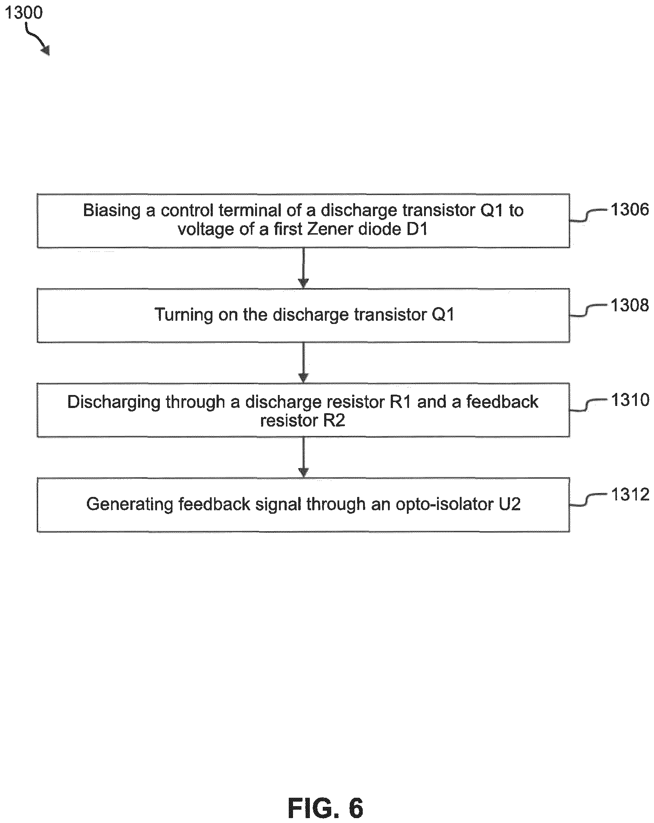

As illustrated in FIG. 6, a method for enabling a discharge circuit, comprising steps of biasing a control terminal of a discharge transistor Q1 to voltage of a first Zener diode D1, the first Zener diode being in series with a discharge enable resistor R4 and connected between the control terminal of the discharge transistor and a negative bus (Step 1206); turning on the discharge transistor Q1 (Step 1208); discharging through a discharge resistor R1 and a feedback resistor R2 (Step 1210); and/or generating feedback signal through an opto-isolator U2 (Step 1212).

b. Timed Safety Shutdown

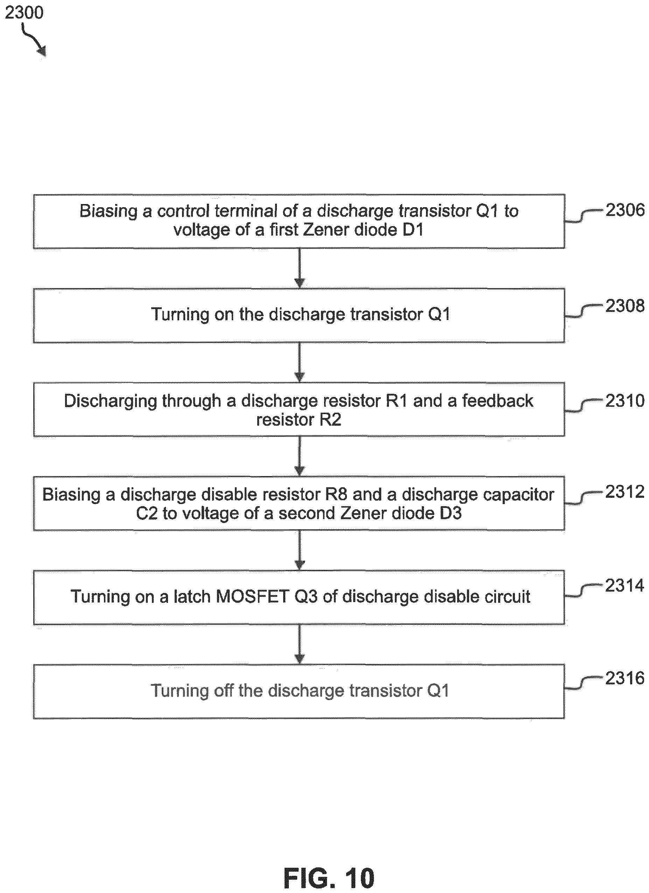

As illustrated in FIG. 10, a method for disabling a discharge circuit, comprising steps of biasing a control terminal of a discharge transistor Q1 to voltage of a first Zener diode D1, the first Zener diode D1 being in series with a discharge enable resistor R4 and connected between the control terminal of the discharge transistor and a negative bus (Step 2206); turning on the discharge transistor Q1 (Step 2208); discharging through a discharge resistor R1 and a feedback resistor R2 (Step 2210); biasing a discharge disable resistor R8 and a discharge disable capacitor C2 to voltage of a second Zener diode D3, the second Zener diode D3 being in series with the discharge disable resistor R8 and connected between the discharge resistor R1 and the negative bus (Step 2212); turning on a third latch MOSFET Q3 of discharge disable circuit (Step 2214); and/or turning off the discharge transistor Q1 (Step 2216).

**Option C**

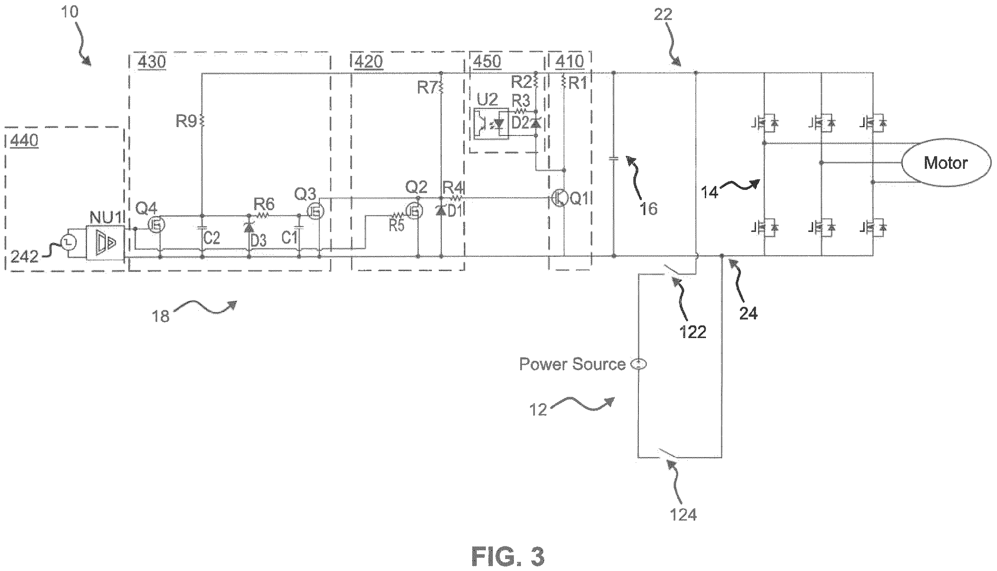

FIG. 3 shows another embodiment of an active discharge system 18 for an inverter 14 connected across link capacitor 16 and between positive DC bus 22 and negative DC bus 24. In some embodiments, the active discharge system 18 includes a discharge circuit 410 and a discharge controller, and the discharge controller includes at least one of a discharge enable circuit 420, a discharge disable circuit 430, a discharge control circuit 440 and a discharge feedback circuit 450.

As illustrated in FIG. 3, the discharge control circuit 440 includes a non-inverting buffer NU1, while the discharge control circuit 240 of Option A includes a first photo coupler U1 and the discharge control circuit 340 of Option B includes a first photo coupler U1 and a third photocoupler U3. In some embodiments, a second latch MOSFET Q2 of the discharge enable circuit 420 and a fourth MOSFET Q4 of the discharge disable circuit 430 share a common gate control signal. More specifically, the gate control signal is connected through the non-inverting buffer NU1 to control both of a second latch MOSFET Q2 and a fourth MOSFET Q4. In some embodiments, the non-inverting buffer NU1 is single isolated powered.

Still referring to FIG. 3, the discharge enable circuit 420 at least includes a fourth and seventh resistor R4 and R7 for current limiting, and a constant voltage output unit such as the first Zener diode D1. In some embodiments, the discharge enable circuit 420 further includes a second latch MOSFET Q2 and a fifth resistor R5. In some embodiments, the second latch MOSFET Q2 connects between the fourth resistor R4 and the negative bus 24, and the gate terminal of the second latch MOSFET Q2 is connected to the output of the discharge control circuit 440, for example, a non-inverting buffer NU1, via a fifth resistor R5.

Still referring to FIG. 3, the discharge disable circuit 430 has a third MOSFET Q3 that functions as a latch switch connected between the gate terminal of the discharge switch Q1 via a current limiting fourth resistor R4 and the negative bus 24. The gate terminal of the third MOSFET Q3 is connected to a connection point between a sixth resistor R6 and a first capacitor C1, and the resistor R6 and the first capacitor C1 are connected in series with a ninth resistor R9 between the positive bus 22 and the negative bus 24, and in parallel to a third Zener diode D3, a discharge disable capacitor C2 and a fourth MOSFET Q4 between the ninth resistor R9 and the negative bus 24. The sixth resistor R6 and the first capacitor C1 form an resistive-capacitive timing network. The third Zener diode D3 is connected to protect the third MOSFET Q3. The gate terminal of the fourth MOSFET Q4 is connected to the output of the discharge control circuit 440, for example, a non-inverting buffer NU1.

a. Normal Operation OR Signal Power Loss

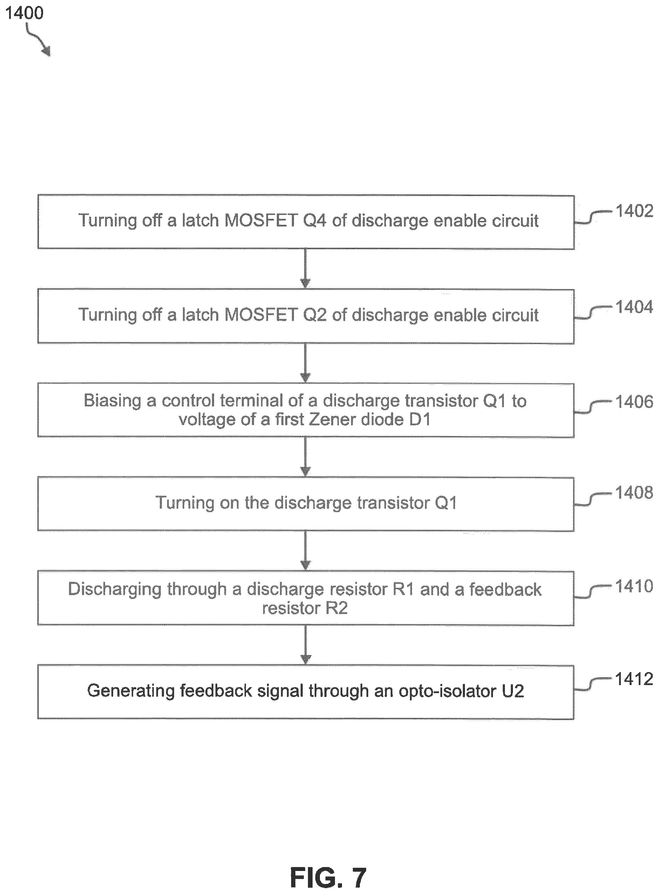

As illustrated in FIG. 7, a method for enabling a discharge circuit, comprising steps of turning off a fourth latch MOSFET Q4 of discharge enable circuit 420 (Step 1402); turning off a second latch MOSFET Q2 of discharge enable circuit 420 (Step 1404); biasing a control terminal of a discharge transistor Q1 to voltage of a first Zener diode D1, the first Zener diode being in series with a discharge enable resistor R4 and connected between the control terminal of the discharge transistor and a negative bus (Step 1406); turning on the discharge transistor Q1 (Step 1408); discharging through a discharge resistor R1 and a feedback resistor R2 (Step 1410); and/or generating feedback signal through an opto-isolator U2 (Step 1412).

b. Timed Safety Shutdown

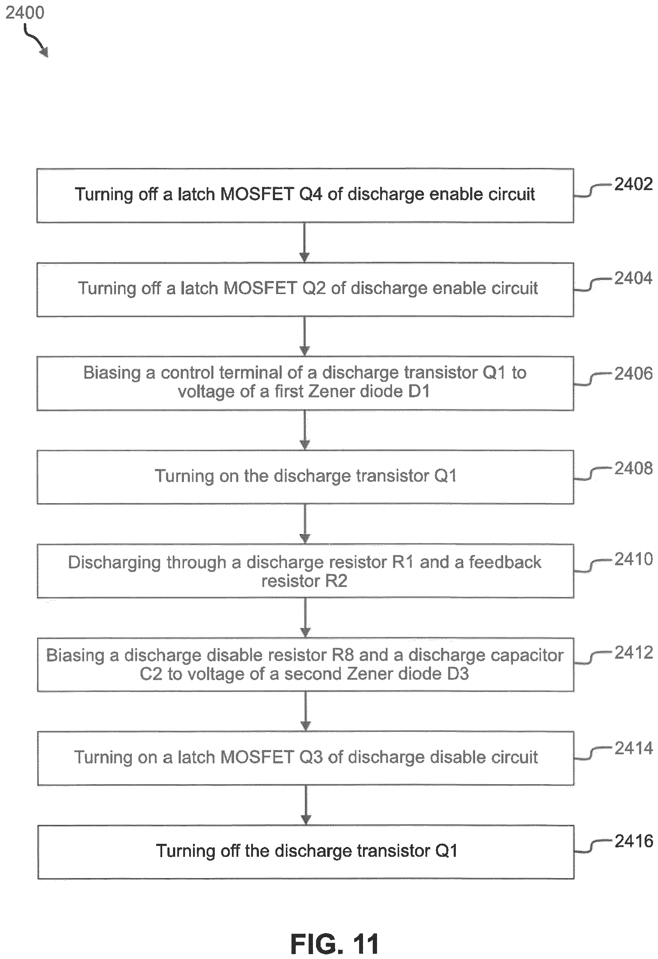

As illustrated in FIG. 11, a method for disabling a discharge circuit, comprising steps of turning on a fourth latch MOSFET Q4 of discharge disable circuit 430 (Step 2402); and turning off a second latch MOSFET Q2 of discharge enable circuit 420 (Step 2404); biasing a control terminal of a discharge transistor Q1 to voltage of a first Zener diode D1, the first Zener diode D1 being in series with a discharge enable resistor R4 and connected between the control terminal of the discharge transistor and a negative bus (Step 2406); turning on the discharge transistor Q1 (Step 2408); discharging through a discharge resistor R1 and a feedback resistor R2 (Step 2410); biasing a discharge disable resistor R8 and a discharge disable capacitor C2 to voltage of a second Zener diode D3, the second Zener diode D3 being in series with the discharge disable resistor R8 and connected between the discharge resistor R1 and the negative bus (Step 2412); turning on a third latch MOSFET Q3 of discharge disable circuit (Step 2414); and/or turning off the discharge transistor Q1 (Step 2416).

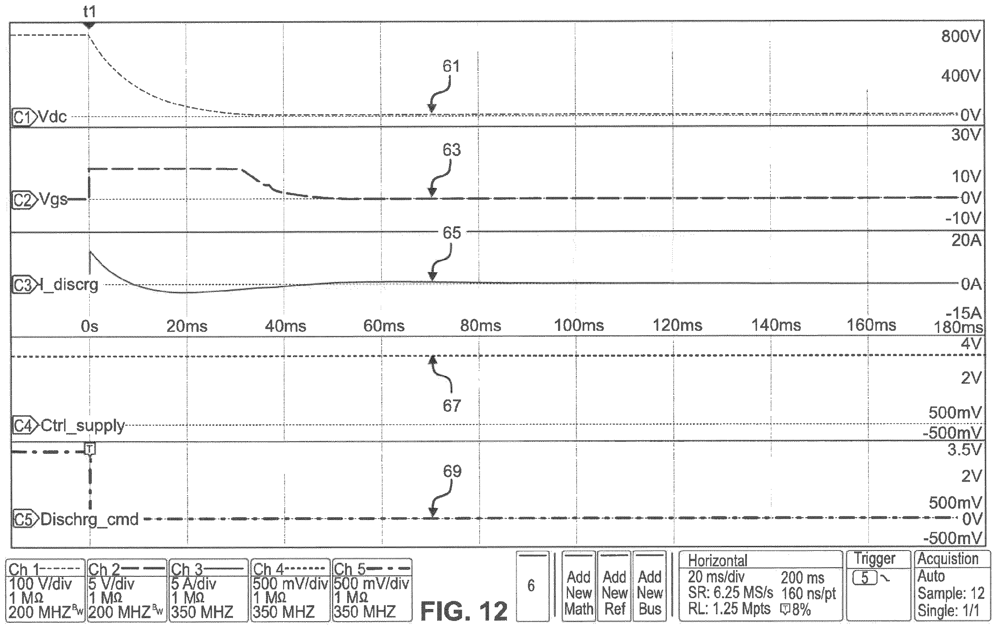

FIG. 12 illustrates operation of the invention when a link capacitor discharge attempt is initiated by receiving (i.e., via the control terminal) an control signal, for example a discharge command Discharg_cmd in low voltage level, at a time t1, when control signal power supply V_ctrl _supply is provided and no ongoing voltage is supplied to the link capacitor and discharging can proceed normally. As shown in FIG. 12, a trace 61 represents a voltage at the link capacitor V_dc, a trace 63 represents a voltage at control terminal of discharge transistor V_gs, a trace 65 represents a current at the discharge resistor I_dischrg, a trace 67 represents a voltage of a control signal power supply V_ctrl_supply, and a trance 69 represents a voltage of a discharge command Discharg_cmd.

During the whole operation, V_ctrl_supply has been maintained, as shown by trace 63. Prior to time t1, V_dc is fixed at substantially 800 volts, Discharg_cmd is in high voltage level, V_gs is fixed at substantially 0 volt, and I_dischrg is fixed at substantially 0 amp. At time t1, as Discharg_cmd turns to a low voltage level, the discharge command is received at a control terminal of discharge transistor, V_gs quickly rises to, for example, a Zener diode voltage. As a result, the discharge transistor of the discharge circuit turns on and the link capacitor is discharged. As shown in FIG. 12, a current trace 65 likewise transitions to a positive value at time tl. After a rapid rise, current trace 65 begins to decay as the link capacitor discharges. The link capacitor discharging results in a corresponding decay of V_gs shown by trace 63. The decaying voltage on link capacitor is shown by a trace 61. V_dc eventually drops to substantially 0 volt in, for example, 40 ms.

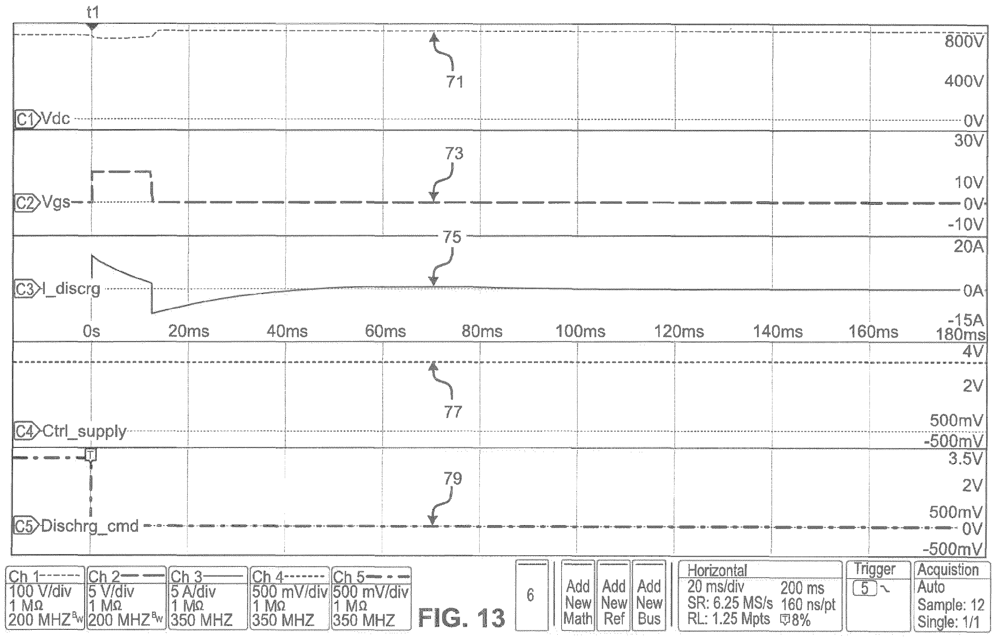

FIG. 13 illustrates operation of the invention when a link capacitor discharge attempt is initiated by receiving (i.e., via the control terminal) an control signal, for example a discharge command Discharg_cmd in low voltage level, at a time t1, when control signal power supply V_ctrl_supply is provided and ongoing voltage is supplied to the link capacitor and the device can safety shutdown. In some embodiments, Safety Shutdown mode is initiated when discharge is erroneously commanded while high-voltage power supply is still connected to link capacitor. As shown in FIG. 13, a trace 71 represents a voltage at the link capacitor V_dc, a trace 73 represents a voltage at control terminal of discharge transistor V_gs, a trace 75 represents a current at the discharge resistor I_dischrg, a trace 77 represents a voltage of a control signal power supply V_ctrl_supply, and a trance 79 represents a voltage of a discharge command Discharg_cmd.

During the whole operation, V_ctrl_supply has been maintained, as shown by trace 73. Prior to time t1, V_dc is fixed at substantially 800 volts, Discharg_cmd is in high voltage level, V_gs is fixed at substantially 0 volt, and I_dischrg is fixed at substantially 0 amp. At time t1, as Discharg_cmd turns to a low voltage level, the discharge command is received at a control terminal of discharge transistor, V_gs quickly rises to, for example, a Zener diode voltage. As a result, the discharge transistor of the discharge circuit turns on and the link capacitor is discharged. As shown in FIG. 13, a current trace 75 likewise transitions to a positive value at time t1. After a rapid rise, current trace 75 begins to decay as the link capacitor discharges. However, because high voltage power supply is still connected to link capacitor, V_dc then rises while V_gs quickly decrease back to substantially 0 volt and discharge current stops flowing, as the discharge switch automatically turns off in Safety Shutdown mode.

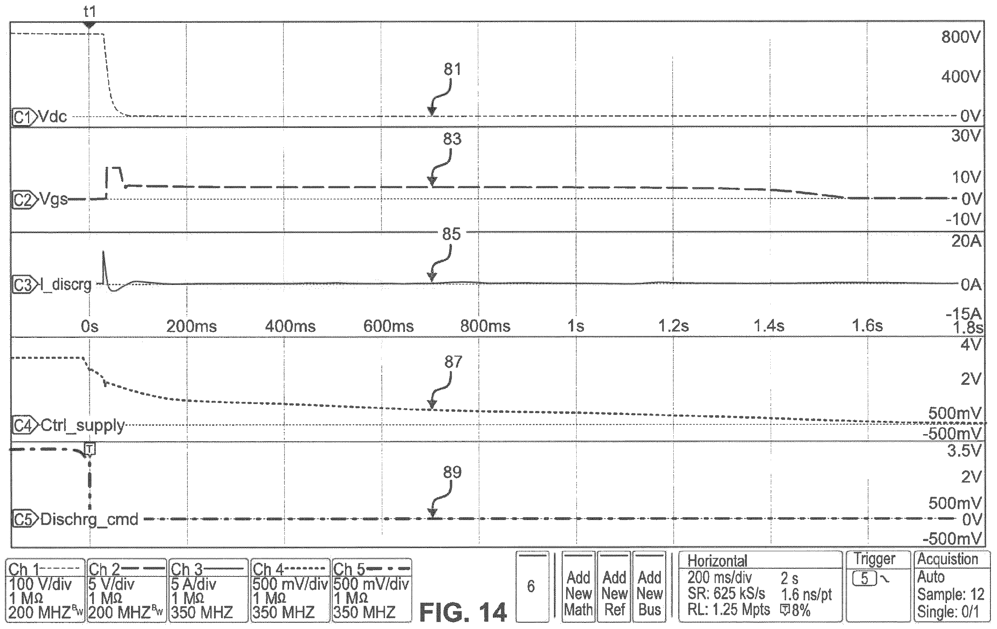

FIG. 14 illustrates operation of the invention when a link capacitor discharge attempt is initiated at a time t1, when control signal power supply V_ctrl_supply is lost and no ongoing voltage is supplied to the link capacitor. In some embodiments, failsafe discharge with control power loss is initiated when control commend is lost while high-voltage power supply is disconnected to link capacitor. As shown in FIG. 14, a trace 81 represents a voltage at the link capacitor V_dc, a trace 83 represents a voltage at control terminal of discharge transistor V_gs, a trace 85 represents a current at the discharge resistor I_dischrg, a trace 87 represents a voltage of a control signal power supply V_ctrl_supply, and a trance 89 represents a voltage of a discharge command Discharg_cmd.

Prior to time t1, V_dc is fixed at substantially 800 volts, Discharg_cmd is in high voltage level, V_gs is fixed at substantially 0 volt, and I_dischrg is fixed at substantially 0 amp. When V_ctrl_supply is accidentally lost, as shown by trace 87, Discharg_cmd turns to a low voltage level, the discharge command is received at a control terminal of discharge transistor, V_gs quickly rises to, for example, a Zener diode voltage. As a result, the discharge transistor of the discharge circuit turns on and the link capacitor is discharged. As shown in FIG. 14, a current trace 85 likewise transitions to a positive value. After a rapid rise, current trace 85 begins to decay as the link capacitor discharges. The link capacitor discharging results in a corresponding decay of V_gs shown by trace 83. The decaying voltage on link capacitor is shown by a trace 81. V_dc eventually drops to substantially 0 volt in, for example, 40 ms.

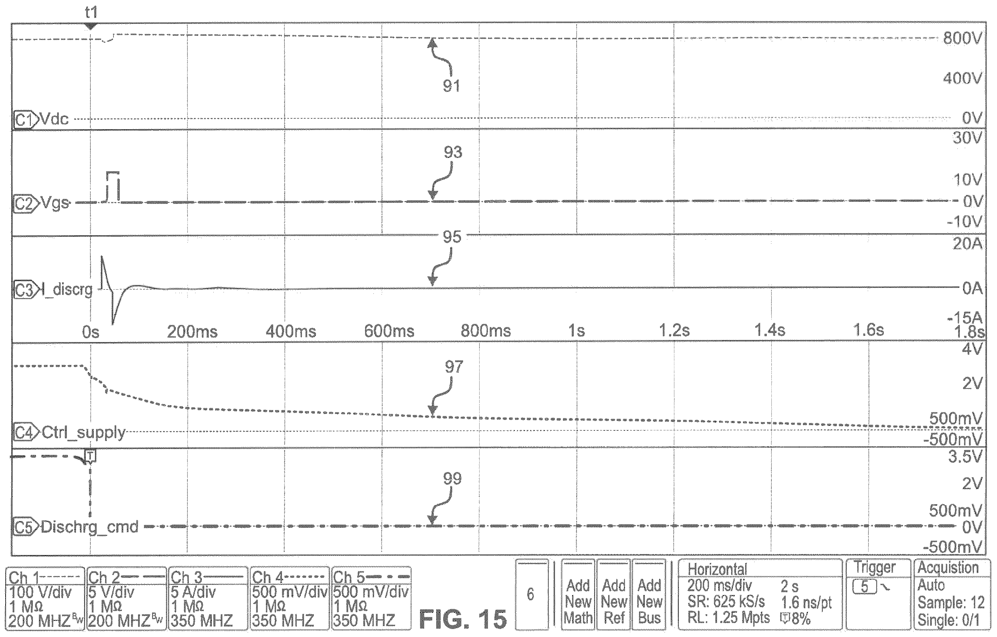

FIG. 15 illustrates operation of the invention when a link capacitor discharge attempt is initiated at a time t1, when control signal power supply V_ctrl_supply is lost and ongoing voltage is supplied to the link capacitor. In some embodiments, Safety Shutdown mode with signal power loss is initiated when control commend is lost while high-voltage power supply is connected to link capacitor. As shown in FIG. 15, a trace 91 represents a voltage at the link capacitor V_dc, a trace 93 represents a voltage at control terminal of discharge transistor V_gs, a trace 95 represents a current at the discharge resistor I_dischrg, a trace 97 represents a voltage of a control signal power supply V_ctrl_supply, and a trance 99 represents a voltage of a discharge command Discharg_cmd.

Prior to time t1, V_dc is fixed at substantially 800 volts, Discharg_cmd is in high voltage level, V_gs is fixed at substantially 0 volt, and I_dischrg is fixed at substantially 0 amp. When V etri_supply is accidentally lost, as shown by trace 97, Discharg_cmd turns to a low voltage level, the discharge command is received at a control terminal of discharge transistor, V_gs quickly rises to, for example, a Zener diode voltage. As a result, the discharge transistor of the discharge circuit turns on and the link capacitor is discharged. As shown in FIG. 15, a current trace 95 likewise transitions to a positive value. After a rapid rise, current trace 95 begins to decay as the link capacitor discharges. However, because high voltage power supply is still connected to link capacitor, V_dc then rises while V_gs quickly decrease back to substantially 0 volt and discharge current stops flowing, as the discharge switch automatically turns off in Safety Shutdown mode.

The above represents example principles. Many embodiments can be made using these principles. Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Aspects of the Disclosure

Aspect 1. A discharge system, comprising:

a discharge circuit including a discharge resistor in series with a discharge transistor, wherein the discharge transistor has a control terminal; and
a discharge controller for providing a control command to the control terminal, the control terminal being responsive to the control command to turn on or turn off the discharge transistor, the discharge controller including:
a control circuit for providing a control signal, the control signal is configured to control at least one of a discharge enable circuit and a discharge disable circuit; the discharge enable circuit, wherein the discharge enable circuit responsive to the control signal from the control circuit to enable the discharge circuit, wherein the discharge enable circuit includes a pull-up resistor in series with a first diode between a positive bus and a negative bus, and an enable circuit junction between the pull-up resistor and the first diode is in series with a fourth resistor and connected to the control terminal of the discharge transistor; and the discharge disable circuit, wherein the discharge disable circuit responds to the control signal from the control circuit to disable the discharge circuit.

Aspect 2. The system of aspect 1, wherein the discharge circuit is configured to be powered by a high-voltage direct current power generated by a link capacitor being discharged by the discharge circuit.

Aspect 3. The system of any of aspects 1-2, further comprising a delayed shut down mechanism, wherein:
when the control signal is disconnected before a inverter including the discharge system being properly shutdown, if the high-voltage direct current power is connected, the discharge circuit shuts down after a pre-determined time to prevent damage to the discharge circuit.

Aspect 4. The system of any of aspects 1-3, wherein a discharge time of the discharge circuit is controllable.

Aspect 5. The system of any of aspects 1-4, wherein a disable time of the discharge circuit is controllable.

Aspect 6. The system of any of aspects 1-5, wherein the discharge disable circuit further includes:

a discharge disable resistor in series with a discharge disable capacitor located between an output of the control circuit and the negative bus;
a ninth resistor located between the output of the control circuit and the discharge resistor;
a third diode being connected between the discharge disable resistor and the negative bus; and
a third transistor connected between the fourth resistor and the negative bus, a gate terminal of the third transistor is connected to a first junction between a sixth resistor and a first disable capacitor, and the sixth resistor and the first disable capacitor are connected between the positive bus via the discharge disable resistor and the negative bus.

Aspect 7. The system of any of aspects 1-6, wherein the control circuit further includes:
a first photo coupler for controlling a discharge time of the discharge circuit, a discharge command is input to the discharge disable circuit via the first photo coupler.

Aspect 8. The system of any of aspects 1-7, wherein the discharge enable circuit further includes:

a second transistor connected between the fourth resistor and the negative bus, the gate terminal of the second transistor is connected to a fifth resistor;
a fifth diode located between the fifth resistor and the negative bus;
a tenth resistor connected to a second junction between the fifth resistor and the fifth diode;
a fourth transistor connected between the second junction and the negative bus, the gate terminal of the fourth transistor is connected to the ninth resistor; and a fourth diode located between the ninth resistor and the negative bus, both the fourth diode and the ninth resistor connect to a disable circuit junction.

Aspect 9. The system of any of aspects 1-8, wherein the control circuit further includes:
a second photo coupler for controlling a disable time of the discharge circuit, the control signal is received by the discharge enable circuit via the second photo coupler.

Aspect 10. The system of any of aspects 1-9, further comprising a discharge feedback circuit for providing a feedback signal to indicate to the discharge circuit is enabled.

Aspect 11. The system of any of aspects 1-10, wherein the discharge feedback circuit further includes:

a second resistor being connected in series with a second diode and connected in parallel to the discharge resistor of the discharge circuit between the positive bus and the discharge transistor of the discharge circuit; and
an opto-isolator being connected in series with a third resistor and in parallel to the second diode, the feedback signal is generated by the opto-isolator.

Aspect 12. The system of any of aspects 1-11, wherein the control circuit further includes a non-inverting buffer.

Aspect 13. The system of any of aspects 1-12, wherein the discharge disable circuit includes:

a ninth resistor located between a disable circuit junction and the discharge resistor;
a discharge disable capacitor being connected between a discharge disable resistor and the negative bus;
a third diode being connected between the discharge disable resistor and the negative bus;
a third transistor connected between the fourth resistor and the negative bus, a gate terminal of the third transistor is connected to a connection point between a sixth resistor and a first disable capacitor, and the sixth resistor and the first disable capacitor are connected between the disable circuit junction and the negative bus; and
a fourth transistor connected between the disable circuit junction and the negative bus, the gate terminal of the fourth transistor is connected to the non-inverting buffer.

Aspect 14. The system of any of aspects 1-13, wherein the discharge enable circuit further includes:
a second transistor connected between the fourth resistor and the negative bus, a gate terminal of the second transistor is connected to the non-inverting buffer via a fifth resistor.

Aspect 15. A method for enabling a discharge circuit, comprising steps of:

biasing a control terminal of a discharge transistor to voltage of a first diode, the first diode being in series with a discharge enable resistor and connected between the control terminal of the discharge transistor and a negative bus;
turning on the discharge transistor;
discharging through a discharge resistor and a feedback resistor; and generating feedback signal through an opto-isolator.

Aspect 16. The method of aspect 15, further comprising the steps of:

turning on a third transistor of discharge enable circuit, a gate terminal of the third transistor is connected to a control circuit having a photo coupler; and
turning off a fourth transistor of discharge enable circuit, the fourth transistor is located between the discharge transistor and the negative bus.

Aspect 17. The method of any of aspects 15-16, further comprising the steps of:

turning off a third transistor of discharge disable circuit, a gate terminal of the third transistor is connected to a control circuit having a non-inverting buffer; and
turning off a fourth transistor of discharge enable circuit ,the fourth transistor is located between the discharge transistor and the negative bus.

Aspect 18. A method for disabling a discharge circuit, comprising steps of:

biasing a control terminal of a discharge transistor to voltage of a first diode, the first diode being in series with a discharge enable resistor and connected between the control terminal of the discharge transistor and a negative bus;
turning on the discharge transistor;
discharging through a discharge resistor and a feedback resistor;
biasing a discharge disable resistor and a discharge disable capacitor to voltage of a second diode, the second diode being in series with the discharge disable resistor and connected between the discharge resistor and the negative bus;
turning on a second transistor of discharge disable circuit; and turning off the discharge transistor.

Aspect 19. The method of aspect 18, further comprising the steps of:

turning on a third transistor of discharge enable circuit, a gate terminal of the third transistor is connected to a control circuit having a photo coupler; and turning off a fourth transistor of discharge enable circuit, the fourth transistor is located between the discharge transistor and the negative bus.

Aspect 20. The method of any of aspects 18-19, further comprising the steps of:

turning off a third transistor of discharge disable circuit, a gate terminal of the third transistor is connected to a control circuit having a non-inverting buffer; and
turning off a fourth transistor of discharge enable circuit ,the fourth transistor is located between the discharge transistor and the negative bus.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

**Claims**

1.  A discharge system, comprising:

a discharge circuit including a discharge resistor in series with a discharge transistor, wherein the discharge transistor has a control terminal; and a discharge controller for providing a control command to the control terminal, the control terminal being responsive to the control command to turn on or turn off the discharge transistor, the discharge controller including:

a control circuit for providing a control signal, the control signal is configured to control at least one of a discharge enable circuit and a discharge disable circuit;
the discharge enable circuit, wherein the discharge enable circuit responsive to the control signal from the control circuit to enable the discharge circuit, wherein the discharge enable circuit includes a pull-up resistor in series with a first diode between a positive bus and a negative bus, and an enable circuit junction between the pull-up resistor and the first diode is in series with a fourth resistor and connected to the control terminal of the discharge transistor; and
the discharge disable circuit, wherein the discharge disable circuit responds to the control signal from the control circuit to disable the discharge circuit.

2.  The system of claim 1, wherein the discharge circuit is configured to be powered by a high-voltage direct current power generated by a link capacitor being discharged by the discharge circuit.

3.  The system of claim 2, further comprising a delayed shut down mechanism, wherein:
when the control signal is disconnected before an inverter including the discharge system being properly shutdown, if the high-voltage direct current power is connected, the discharge circuit shuts down after a pre-determined time to prevent damage to the discharge circuit.

4.  The system of claim 1, wherein a discharge time of the discharge circuit is controllable.

5.  The system of claim 1, wherein a disable time of the discharge circuit is controllable.

6.  The system of claim 1, wherein the discharge disable circuit further includes:

a discharge disable resistor in series with a discharge disable capacitor located between an output of the control circuit and the negative bus;
a ninth resistor located between the output of the control circuit and the discharge resistor;
a third diode being connected between the discharge disable resistor and the negative bus; and
a third transistor connected between the fourth resistor and the negative bus, a gate terminal of the third transistor is connected to a first junction between a sixth resistor and a first disable capacitor, and the sixth resistor and the first disable capacitor are connected between the positive bus via the discharge disable resistor and the negative bus.

7. The system of claim 6, wherein the control circuit further includes:
a first photo coupler for controlling a discharge time of the discharge circuit, a discharge command is input to the discharge disable circuit via the first photo coupler.

8. The system of claim 6, wherein the discharge enable circuit further includes:

a second transistor connected between the fourth resistor and the negative bus, the gate terminal of the second transistor is connected to a fifth resistor;
a fifth diode located between the fifth resistor and the negative bus;
a tenth resistor connected to a second junction between the fifth resistor and the fifth diode;
a fourth transistor connected between the second junction and the negative bus, the gate terminal of the fourth transistor is connected to the ninth resistor; and
a fourth diode located between the ninth resistor and the negative bus, both the fourth diode and the ninth resistor connect to a disable circuit junction.

9. The system of claim 8, wherein the control circuit further includes:
a second photo coupler for controlling a disable time of the discharge circuit, the control signal is received by the discharge enable circuit via the second photo coupler.

10. The system of claim 1, further comprising a discharge feedback circuit for providing a feedback signal to indicate to the discharge circuit is enabled.

11. The system of claim 10, wherein the discharge feedback circuit further includes:

a second resistor being connected in series with a second diode and connected in parallel to the discharge resistor of the discharge circuit between the positive bus and the discharge transistor of the discharge circuit; and
an opto-isolator being connected in series with a third resistor and in parallel to the second diode, the feedback signal is generated by the opto-isolator.

12. The system of claim 1, wherein the control circuit further includes a non-inverting buffer.

13. The system of claim 12, wherein the discharge disable circuit includes:

a ninth resistor located between a disable circuit junction and the discharge resistor;
a discharge disable capacitor being connected between a discharge disable resistor and the negative bus;
a third diode being connected between the discharge disable resistor and the negative bus;
a third transistor connected between the fourth resistor and the negative bus, a gate terminal of the third transistor is connected to a connection point between a sixth resistor and a first disable capacitor, and the sixth resistor and the first disable capacitor are connected between the disable circuit junction and the negative bus; and
a fourth transistor connected between the disable circuit junction and the negative bus, the gate terminal of the fourth transistor is connected to the non-inverting buffer.

14. The system of claim 12, wherein the discharge enable circuit further includes:
a second transistor connected between the fourth resistor and the negative bus, a gate terminal of the second transistor is connected to the non-inverting buffer via a fifth resistor.

15. A method for enabling a discharge circuit, comprising steps of:

biasing a control terminal of a discharge transistor to voltage of a first diode, the first diode being in series with a discharge enable resistor and connected between the control terminal of the discharge transistor and a negative bus;
turning on the discharge transistor;
discharging through a discharge resistor and a feedback resistor; and
generating feedback signal through an opto-isolator.

**FIG. 1**

EP 4 568 090 A1

**FIG. 2**

EP 4 568 090 A1

**FIG. 3**

EP 4 568 090 A1

1000

Activating the discharge enable circuit     1002

Activating the discharge circuit     1004

Activating the feedback circuit     1006

# FIG. 4

1200

```
┌─────────────────────────────────────────────────────────┐
│ Turning on a latch MOSFET Q4 of discharge enable circuit │──1202
└─────────────────────────────────────────────────────────┘
                            │
                            ▼
┌─────────────────────────────────────────────────────────┐
│ Turning off a latch MOSFET Q2 of discharge enable circuit│──1204
└─────────────────────────────────────────────────────────┘
                            │
                            ▼
┌─────────────────────────────────────────────────────────┐
│  Biasing a control terminal of a discharge transistor Q1 │──1206
│         to voltage of a first Zener diode D1             │
└─────────────────────────────────────────────────────────┘
                            │
                            ▼
┌─────────────────────────────────────────────────────────┐
│          Turning on the discharge transistor Q1          │──1208
└─────────────────────────────────────────────────────────┘
                            │
                            ▼
┌─────────────────────────────────────────────────────────┐
│  Discharging through a discharge resistor R1 and a       │──1210
│                 feedback resistor R2                     │
└─────────────────────────────────────────────────────────┘
                            │
                            ▼
┌─────────────────────────────────────────────────────────┐
│  Generating feedback signal through an opto-isolator U2  │──1212
└─────────────────────────────────────────────────────────┘
```

# FIG. 5

1300

Biasing a control terminal of a discharge transistor Q1 to voltage of a first Zener diode D1 — 1306

Turning on the discharge transistor Q1 — 1308

Discharging through a discharge resistor R1 and a feedback resistor R2 — 1310

Generating feedback signal through an opto-isolator U2 — 1312

# FIG. 6

1400

Turning off a latch MOSFET Q4 of discharge enable circuit — 1402

Turning off a latch MOSFET Q2 of discharge enable circuit — 1404

Biasing a control terminal of a discharge transistor Q1 to voltage of a first Zener diode D1 — 1406

Turning on the discharge transistor Q1 — 1408

Discharging through a discharge resistor R1 and a feedback resistor R2 — 1410

Generating feedback signal through an opto-isolator U2 — 1412

**FIG. 7**

2000

| Activating the feedback circuit | 2006 |
| Activating the discharge circuit | 2008 |
| Activating the discharge disable circuit | 2010 |
| Deactivating the discharge circuit | 2012 |

# FIG. 8

2200

Turning on a latch MOSFET Q4 of discharge enable circuit ⌐2202

Turning off a latch MOSFET Q2 of discharge enable circuit ⌐2204

Biasing a control terminal of a discharge transistor Q1 to voltage of a first Zener diode D1 ⌐2206

Turning on the discharge transistor Q1 ⌐2208

Discharging through a discharge resistor R1 and a feedback resistor R2 ⌐2210

Biasing a discharge disable resistor R8 and a discharge capacitor C2 to voltage of a second Zener diode D3 ⌐2212

Turning on a latch MOSFET Q3 of discharge disable circuit ⌐2214

Turning off the discharge transistor Q1 ⌐2216

# FIG. 9

2300

Biasing a control terminal of a discharge transistor Q1 to voltage of a first Zener diode D1 — 2306

Turning on the discharge transistor Q1 — 2308

Discharging through a discharge resistor R1 and a feedback resistor R2 — 2310

Biasing a discharge disable resistor R8 and a discharge capacitor C2 to voltage of a second Zener diode D3 — 2312

Turning on a latch MOSFET Q3 of discharge disable circuit — 2314

Turning off the discharge transistor Q1 — 2316

# FIG. 10

2400

```
┌─────────────────────────────────────────────────────────┐
│  Turning off a latch MOSFET Q4 of discharge enable circuit │──2402
└─────────────────────────────────────────────────────────┘
                            │
                            ▼
┌─────────────────────────────────────────────────────────┐
│  Turning off a latch MOSFET Q2 of discharge enable circuit │──2404
└─────────────────────────────────────────────────────────┘
                            │
                            ▼
┌─────────────────────────────────────────────────────────┐
│  Biasing a control terminal of a discharge transistor Q1 to │──2406
│           voltage of a first Zener diode D1               │
└─────────────────────────────────────────────────────────┘
                            │
                            ▼
┌─────────────────────────────────────────────────────────┐
│         Turning on the discharge transistor Q1            │──2408
└─────────────────────────────────────────────────────────┘
                            │
                            ▼
┌─────────────────────────────────────────────────────────┐
│  Discharging through a discharge resistor R1 and a feedback │──2410
│                    resistor R2                            │
└─────────────────────────────────────────────────────────┘
                            │
                            ▼
┌─────────────────────────────────────────────────────────┐
│ Biasing a discharge disable resistor R8 and a discharge capacitor │──2412
│        C2 to voltage of a second Zener diode D3           │
└─────────────────────────────────────────────────────────┘
                            │
                            ▼
┌─────────────────────────────────────────────────────────┐
│  Turning on a latch MOSFET Q3 of discharge disable circuit │──2414
└─────────────────────────────────────────────────────────┘
                            │
                            ▼
┌─────────────────────────────────────────────────────────┐
│        Turning off the discharge transistor Q1           │──2416
└─────────────────────────────────────────────────────────┘
```

# FIG. 11

FIG. 12

EP 4 568 090 A1

**FIG. 13**

EP 4 568 090 A1

**FIG. 14**

FIG. 15

Europäisches
Patentamt

European
Patent Office

Office européen
des brevets

# EUROPEAN SEARCH REPORT

**Application Number**

EP 24 20 4921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/008983 A1 (WIND CHRISTIAN [DE]) 14 January 2021 (2021-01-14) * paragraphs [0002], [0003], [0036], [0037]; figure 2 * | 1-15 | INV. H02M1/32 H02M7/5387 H02M1/00 H02M1/08 |
| X | US 2017/355267 A1 (ZHOU YAN [US] ET AL) 14 December 2017 (2017-12-14) * paragraphs [0026], [0033], [0034]; figures 5A, 5B, 6A, 6B, 7 * | 1-15 | |
| A | US 2020/044577 A1 (SHIKAGAWA TSUTOMU [JP] ET AL) 6 February 2020 (2020-02-06) * paragraph [0051] - paragraph [0060]; figure 5 * | 1-15 | |

**TECHNICAL FIELDS SEARCHED (IPC)**

H02M
H02H

The present search report has been drawn up for all claims

| Place of search | Date of completion of the search | Examiner |
|---|---|---|
| The Hague | 27 February 2025 | Zeljkovic, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4921

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2025

| Patent document cited in search report | Publication date | Patent family member(s) | Publication date |
|---|---|---|---|
| US 2021008983 A1 | 14-01-2021 | CN 112075002 A | 11-12-2020 |
| | | DE 102018208292 A1 | 22-08-2019 |
| | | EP 3756253 A1 | 30-12-2020 |
| | | JP 2021514172 A | 03-06-2021 |
| | | KR 20200123198 A | 28-10-2020 |
| | | MA 51895 A | 30-12-2020 |
| | | US 2021008983 A1 | 14-01-2021 |
| | | WO 2019158748 A1 | 22-08-2019 |
| US 2017355267 A1 | 14-12-2017 | CN 107508528 A | 22-12-2017 |
| | | DE 102017112572 A1 | 14-12-2017 |
| | | US 2017355267 A1 | 14-12-2017 |
| US 2020044577 A1 | 06-02-2020 | CN 110784154 A | 11-02-2020 |
| | | DE 102019005157 A1 | 06-02-2020 |
| | | JP 6863935 B2 | 21-04-2021 |
| | | JP 2020022259 A | 06-02-2020 |
| | | US 2020044577 A1 | 06-02-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63608022